# EUROPÄISCHE PATENTSCHRIFT

(11) **EP 3 069 186 B1**
(45) Veröffentlichungstag und Bekanntmachung des Hinweises auf die Patenterteilung: **20.09.2023**
(21) Anmeldenummer: 14777308.9
(22) Anmeldetag: 29.09.2014
(51) Int. Cl.: G02B 26/10, B23K 26/38, B23K 26/06, B23K 26/03, B23K 26/382

(54) **VORRICHTUNG UND VERFAHREN ZUR FÜHRUNG EINES LASERSTRAHLS**
DEVICE AND METHOD FOR GUIDING A LASER BEAM
DISPOSITIF ET PROCÉDÉ DE GUIDAGE D'UN FAISCEAU LASER

(30) Priorität: 11.11.2013 DE 102013222834
(43) Veröffentlichungstag der Anmeldung: 21.09.2016
(73) Patentinhaber: Robert Bosch GmbH, 70442 Stuttgart (DE)
(72) Erfinder: MICHALOWSKI, Andreas, 70794 Filderstadt (DE); TEWIELE, Dominik, 70374 Stuttgart (DE); ENGELMAYER, Andreas, 70199 Stuttgart (DE)
(86) Internationale Anmeldenummer: PCT/EP2014/070751
(87) Internationale Veröffentlichungsnummer: WO 2015/067411

(56) Entgegenhaltungen:
- EP-A1- 1 656 234
- DE-A1-102011 006 152
- GB-A- 2 331 038
- US-A1- 2005 115 939
- US-A1- 2011 132 881

## Beschreibung

Die Erfindung betrifft eine Vorrichtung zur Führung eines Laserstrahls zur Bearbeitung eines Werkstücks mit einer Spiegelanordnung mit beweglichen Spiegeln zur Erzeugung eines Anstellwinkels des Laserstrahls auf eine fokussierende Optik zur Einstellung eines lateralen Versatzes des Laserstrahls auf dem Werkstück und zur Erzeugung eines lateralen Versatzes des Laserstrahls auf der fokussierenden Optik zur Einstellung eines Auftreffwinkels des Laserstrahls auf dem Werkstück.

Die Erfindung betrifft weiterhin ein Verfahren zur Führung eines Laserstrahls zur Bearbeitung eines Werkstücks, wobei mit einer Spiegelanordnung mit beweglichen Spiegeln ein Anstellwinkel des Laserstrahls auf eine fokussierende Optik zur Einstellung eines lateralen Versatzes des Laserstrahls auf dem Werkstück und ein lateraler Versatz des Laserstrahls auf der fokussierenden Optik zur Einstellung eines Auftreffwinkels des Laserstrahls auf dem Werkstück erzeugt wird und wobei durch eine entsprechende Bewegung der Spiegel der Laserstrahl unter vorgegebenen Winkeln auf vorgegebenen, um eine optische Achse verlaufenden Bahnen über das Werkstück geführt wird.

Eine solche Vorrichtung ist aus der WO 2006/021442 bekannt. Die Schrift beschreibt einen Scankopf als Teil einer Laser Bohr- und Schneideinrichtung mit einer in den Lichtweg des Lasers angeordneten Reihe folgender Komponenten:
eine intensitätsregulierende Strahldämpfungseinheit in Verbindung mit einer eine parallele Strahlversetzung regulierenden Taumeleinheit, ein den Strahlquerschnitt des Lasers vergrößerndes Strahl-Expander-Teleskop, einen den Focus des Laserstrahls führenden Scanblock und eine den Laserstrahl auf die Probe fokussierende Arbeitseinheit sowie optional in den Lichtweg einkoppelbare zusätzliche Prüf- und Kontrolleinheiten.

Die Taumeleinheit ist aus zwei planparallelen, drehbaren Fenstern aufgebaut und ermöglicht einen seitlichen Versatz eines durchlaufenden Laserstrahls. Durch die Rotation der Fenster folgt der Laserstrahl einer geschlossenen Bahn um die optische Achse. Der seitliche Versatz und somit der Durchmesser der geschlossenen Bahn wird durch das Strahl-Expander-Teleskop vergrößert. Weiterhin kann durch das Strahl-Expander-Teleskop der Fokus des Laserstrahls in Ausbreitungsrichtung verschoben werden. Durch den Strahlversatz wird der Laserstrahl außerhalb der optischen Achse auf die fokussierende Arbeitseinheit gelenkt, so dass der Laserstrahl nach der Arbeitseinheit unter einem von dem eingestellten Versatz abhängigen Winkel auf das zu bearbeitende Werkstück trifft. Durch den nach dem Strahl-Expander-Teleskop angeordneten Scanblock wird der Laserstrahl mit einer Spiegelanordnung in eine X- beziehungsweise Y-Richtung abgelenkt. Der so unter einem Winkel auf die fokussierende Arbeitseinheit treffende Laserstrahl trifft entsprechend außerhalb der optischen Achse auf das Werkstück. Durch die Taumeleinheit und das nachfolgende Strahl-Expander-Teleskop wird demnach der Auftreffwinkel des Laserstrahls auf das Werkstück vorgegeben, während die Spiegelanordnung des Scanblocks den seitlichen Versatz des Laserstrahls auf dem Werkstück ermöglicht. Durch entsprechende Rotation der Fenster der Taumeleinheit und dynamischen Ablenkung des Laserstrahls durch den Scanblock wird der Laserstrahl unter vorgebbaren Winkeln auf einer in ihrem Verlauf durch den Scanblock vorgebbaren, geschlossenen Bahn um die optische Achse rotierend auf das Werkstück geleitet. Dies ermöglicht beispielsweise das Bohren von Löchern mit von der runden Form abweichenden Geometrien und negativer Konizität.

Nachteilig bei entsprechend der WO 2006/021442 aufgebauten Systemen ist der große benötige Scanspiegel in dem Scanblock, da der Strahl zuvor durch das Strahl-Expander-Teleskop bereits aufgeweitet und lateral versetzt wurde. Weiterhin benötigen die rotierenden Fenster der Taumeleinheit sehr große Scanwinkel beziehungsweise dicke Fenster mit hoher Trägheit, um den notwendigen Strahlversatz zu erzeugen. Beide Anforderungen führen zu einer deutlichen Einschränkung der Dynamik des Systems. Die Größe des Scanspiegels erfordert weiterhin einen Kompromiss zwischen dem maximalen Anstellwinkel und der erzielbaren Dynamik. Dadurch ist bei typischen Systemen der maximale Anstellwinkel auf ca. 5° beschränkt. Ein weiterer Nachteil der mit zwei rotierenden Fenstern aufgebauten Taumeleinheit liegt in einem durch Temperaturschwankungen hervorgerufenen Fokusshift.

Die Schrift DE 10 2011 006 152 beschreibt eine Trepanieroptik zur Einstellung und Variation eines Propagationswinkels und einer lateralen Versetzung elektromagnetischer Strahlung, insbesondere eines Laserstrahls zur Anwendung in Bearbeitungssystemen. Die Trepanieroptik ist gekennzeichnet durch
- eine eingangsseitige, aktuatorisch angetriebene Kippspiegelanordnung zur Reflektion der einfallenden elektromagnetischen Strahlung, und
- mindestens eine ausgangsseitige, aktuatorisch angetriebene Kippspiegelanordnung zur Weiterleitung der reflektierten elektromagnetischen Strahlung zur Ausgangsseite der Trepanieroptik,
- wobei die mindestens zwei Kippspiegelanordnungen mittels einer Steuerungseinrichtung jeweils um zwei orthogonale Kippachsen unabhängig voneinander derart verkippbar angetrieben sind, dass Propagationswinkel (ϕ) und laterale Versetzung (v) der elektromagnetischen Strahlung unabhängig voneinander variabel einstellbar sind. Die aktuatorisch angetriebenen Kippspiegelanordnungen können dabei durch Piezoaktuatoren oder Linearantriebe betätigt oder als Galvanometerspiegel ausgeführt sein. Der seitliche Versatz sowie der Winkel des Laserstrahls werden rein reflektiv vor einer Fokussiereinheit eingestellt. Durch die Fokussiereinheit wird der seitliche Versatz in einen Winkel und der Anstellwinkel in einen seitlichen Versatz umgewandelt und der Laserstrahl auf das zu bearbeitende Werkstück gelenkt. Die Kippspiegelanordnung ermöglicht durch ihre frei beweglichen Spiegel eine freie Vorgabe des Auftreffwinkels und der Bahn, auf welcher der Laserstrahl über das Werkstück gelenkt wird. Dabei ermöglicht die geringe Masse der Kippspiegel eine hohe Dynamik des Systems.

Weitere Trepaniervorrichtungen sind aus der US2011132881 A1 bekannt.

Um einen ausreichenden lateralen Versatz des Laserstrahls vor der Fokussiereinheit zur Erzeugung eines gewünschten Propagationswinkels nach der Fokussiereinheit zu erhalten ist jedoch eine aufwändige Optik in Form von präzise ausgerichteten Faltungsspiegeln innerhalb der Kippspiegelanordnung beziehungsweise ein langer, nicht kompakter Strahlengang notwendig.

Es ist daher Aufgabe der Erfindung, eine vergleichsweise einfach aufgebaute optische Vorrichtung bereitzustellen, welche einen Laserstrahl mit einer hohen Dynamik unter einem gewünschten Winkel und auf in Grenzen frei wählbaren Bahnen auf ein zu bearbeitendes Werkstück lenkt. Es ist weiterhin Aufgabe der Erfindung, ein entsprechendes Verfahren bereitzustellen.

### Offenbarung der Erfindung

Die Aufgabe der Erfindung wird durch eine Vorrichtung zur Führung eines Laserstrahls gemäß Anspruch 1, sowie durch ein entsprechendes Verfahren gemäß Anspruch 6, gelöst, wobei zwischen der Spiegelanordnung und der fokussierenden Optik eine optische Anordnung zur Strahlaufweitung und zur variablen Einstellung der Fokusentfernung des Laserstrahls angeordnet ist. Durch die Strahlaufweitung wird der seitliche Versatz des Laserstrahls, welcher von der Spiegelanordnung bewirkt wird, vergrößert. Der Laserstrahl kann somit in einem größeren Abstand von der optischen Achse auf die fokussierende Optik gelenkt werden, was zu einem größeren Einstellbereich des Auftreffwinkels auf das zu bearbeitende Werkstück führt. Auf zusätzliche Faltspiegel in der Spiegelanordnung kann somit verzichtet werden oder ihre Anzahl kann zumindest reduziert werden. Der Anstellwinkel wird vor der Aufweitung erzeugt, so dass keine drehenden Spiegel mehr zwischen der optischen Anordnung zur Strahlaufweitung und zur variablen Einstellung der Fokusentfernung und der fokussierenden Optik vorgesehen werden müssen. Dadurch können kleinere und damit dynamischere bewegliche Spiegel eingesetzt werden, was zu einer schnelleren Bewegung des Laserstrahls auf dem Werkstück führt. Durch die kleineren benötigen Spiegel und die anschließende Versatzmulitplikation durch die Strahlaufweitung wird es möglich, Spiegelanordnung zu verwenden, wie sie auch für andere Scan-Anwendungen in großer Stückzahl verwendet werden, so dass eine kostengünstige Herstellung der Vorrichtung ermöglicht wird.

Durch die Möglichkeit, mit Hilfe der optischen Anordnung die Fokusentfernung des Laserstrahls einzustellen, kann diese unabhängig von dem Auftreffwinkel und dem lateralen Versatz auf die gewünschte Fokusebene auf dem Werkstück eingestellt werden. Der laterale Versatz und der Anstellwinkel des Laserstrahls können durch die Spiegelanordnung in alle Richtungen umlaufend zur optischen Achse dadurch eingestellt werden, dass die Spiegelanordnung aus zwei kardanisch gelagerten Spiegeln oder aus einem ersten Spiegelpaar mit parallelen Drehachsen und einem zweiten Spiegelpaar mit parallelen, zu dem ersten Spiegelpaar zumindest näherungsweise orthogonal angeordneten Drehachsen ausgeführt ist. Die Reihenfolge der Spiegel der beiden Spiegelpaare kann dabei beliebig vorgegeben sein. So können entlang der Ausbreitungsrichtung des Laserstrahls zunächst zwei um ihre x-Achse und anschließend zwei um ihre y-Achse drehbare Spiegel vorgesehen sein. Alternativ kann beispielsweise auch eine Reihenfolge der Spiegel mit den Drehachsen x-Achse, y-Achse, x-Achse, y-Achse oder jeder anderen Reihenfolge vorgesehen sein. Wesentlich für die Anordnung aus zwei Spiegelpaaren ist, dass sie aus zwei um ihre x-Achse drehbaren Spiegeln und zwei um ihre y-Achse drehbaren Spiegeln aufgebaut ist.

Es kann vorgesehen sein, dass die Spiegel durch Piezoaktuatoren oder durch Linearantriebe angetrieben sind oder dass die Spiegel als Galvanometerspiegel ausgeführt sind.

Die kardanisch gelagerten Spiegel können beispielsweise durch Piezoaktuatoren oder durch Linearantriebe in x- und y-Richtung gekippt werden und ermöglichen so eine entsprechende Ablenkung des Laserstrahls. Durch zwei solche in dem Strahlverlauf hintereinander geschaltete Spiegel können ein lateraler Versatz und ein Anstellwinkel des Laserstrahls in x- und y-Richtung eingestellt werden. Drehbar gelagerte Spiegelpaare können aus zumindest annähernd mit ihren Drehachsen senkrecht zueinander angeordneten Galvanometerspiegeln ausgeführt sein, wobei die Ablenkung in x-Richtung durch zwei Spiegel und die Ablenkung in y-Richtung durch zwei weitere Spiegel der beiden Spiegelpaare erfolgt. Durch zwei solche hintereinander geschalteten Spiegelpaare kann ebenfalls ein lateraler Versatz und ein Anstellwinkel des Laserstrahls in x- und y-Richtung eingestellt werden.

Entsprechend einer bevorzugten Ausgestaltungsvariante der Erfindung kann es vorgesehen sein, dass in dem Strahlengang des Laserstrahls zwischen der Spiegelanordnung und der optischen Anordnung zur Strahlaufweitung und zur variablen Einstellung der Fokusentfernung eine Strahlweiche vorgesehen ist, welche den Laserstrahl auf zwei oder mehrere optische Anordnungen zur Strahlaufweitung und zur variablen Einstellung der Fokusentfernungen und den Strahlengängen folgend auf zwei oder mehrere fokussierende Optiken aufteilt oder dass in dem Strahlengang des Laserstrahls nach der optischen Anordnung zur Strahlaufweitung und zur variablen Einstellung der Fokusentfernung eine Strahlweiche vorgesehen ist, welche den Laserstrahl auf zwei oder mehrere fokussierende Optiken aufteilt. Der Laserstrahl kann somit aufgeteilt mehreren Bearbeitungsköpfen und darüber mehreren Werkstücken zugeführt werden.

Ein vollständiger Aufbau der Vorrichtung kann dadurch realisiert werden, dass die Vorrichtung entlang der Ausbreitung des Laserstrahls zumindest folgende Komponenten aufweist:
- eine Laserquelle,
- die Spiegelanordnung
- die optische Anordnung zur Strahlaufweitung und zur variablen Einstellung der Fokusentfernung,
- die fokussierende Optik nach dem zweiten Strahlteiler.

Die Laserquelle erzeugt den Laserstrahl. Dieser wird der bereits beschriebenen Spiegelanordnung und nachfolgend der Anordnung zur Strahlaufweitung und zur variablen Einstellung der Fokusentfernung zugeführt. Anschließend wird der Laserstrahl auf die fokussierende Optik und von dort in einer durch die Spiegelanordnung verursachten Taumelbewegung auf das Werkstück geleitet.

Optional kann es vorgesehen sein, dass unmittelbar vor dem Werkstück eine Prozessgasdüse vorgesehen ist. Einer Gaszuführung beim Bohren durch eine solche koaxiale Prozessgasdüse ermöglicht erfahrungsgemäß bessere Bohrergebnisse, insbesondere bei hohen mittleren Laserleistungen. Die Gasströmung entfernt Abtragsprodukte aus der Wechselwirkungszone, andererseits können Oxidation oder auch die lonisationseffekte des Gases beeinflusst werden.

Weiterhin kann es optional vorgesehen sein, dass in dem Strahlengang des Laserstrahls Strahlteiler vorgesehen sind, die eine Auskopplung von Laserlicht oder Anteilen des Laserlichts beziehungsweise Licht benachbarter Wellenlängen für Analysefunktionen ermöglichen. So kann zwischen der Laserquelle und der Spiegelanordnung ein erster Strahlteiler vorgesehen sein, der einen Teil des Laserstrahls einer Sensorik zur Überwachung beispielsweise des Strahlprofils und der Strahlposition zuführt. Ein zweiter Strahlteiler kann zwischen der optischen Anordnung zur Strahlaufweitung und zur variablen Einstellung der Fokusentfernung und der fokussierenden Optik vorgesehen sein. Nach dem zweiten Strahlteiler können beispielsweise die Brennebene mit dem zu bearbeitenden Bauteil analysiert werden. Es können die Spotgröße, die Fokussierung, das Strahlprofil im Fokus, das Bearbeitungsergebnis sowie die Abstrahlung des Plasmas überwacht werden. Weiterhin kann durch den zweiten Strahlteiler eine koaxiale Beleuchtung erfolgen.

Zusätzlich zu den aufgeführten Komponenten kann die zuvor beschriebene Strahlweiche in den Strahlengang eingeführt sein, so dass der Laserstrahl entsprechend mehreren analog aufgebauten Bearbeitungsköpfen zugeführt werden kann.

Die das Verfahren betreffende Aufgabe der Erfindung wird dadurch gelöst, dass der Verlauf des Laserstrahls mit einer zwischen der Spiegelanordnung und der fokussierenden Optik vorgesehenen optischen Anordnung aufgeweitet wird und dass die Fokusentfernung des Laserstrahls durch die optische Anordnung eingestellt wird. Durch die Aufweitung wird ein durch die Spiegelanordnung erzeugter Versatz des Laserstrahls verstärkt, so dass der Laserstrahl weiter entfernt von der optischen Achse auf die fokussierende Optik trifft und demnach unter einem größeren Winkel auf das Werkstück gelenkt werden kann. Durch den mit der Spiegelanordnung erzeugten Anstellwinkel und den durch die optische Anordnung verstärkten lateralen Versatz des Laserstrahls kann bei entsprechender Bewegung der Spiegel der Laserstrahl in um die optische Achse verlaufenden Bahnen und unter einem vorgegebenen, zur optischen Achse hin ausgerichteten Winkel auf das Werkstück gelenkt werden. Der Laserstrahl führt somit nach der fokussierenden Optik eine vorgegebene Taumelbewegung um die optische Achse durch, womit beispielsweise Bohrungen mit von der runden Form abweichenden Geometrien, Hinterschnitte oder Mikro-Durchbrüche erzeugt werden können. Durch die Einstellung der Fokusentfernung wird der Laserstrahl dabei immer in der gewünschten Fokusebene fokussiert.

Wird die Fokusentfernung durch die optische Anordnung verstellt, so ändert sich neben der Fokusebene auch geringfügig und unbeabsichtigt der Austrittswinkel des Laserstrahls aus der fokussierenden Optik und damit der Auftreffwinkel des Laserstrahls auf dem Werkstück. Der Austrittswinkel aus der fokussierenden Optik wird weiterhin geringfügig bei einer Änderung des Anstellwinkels durch die Spiegelanordnung beeinflusst. Um dies wieder auszugleichen und den gewünschten Austrittswinkel aus der fokussierenden Optik und somit den gewünschten Auftreffwinkel auf dem Werkstück beizubehalten ist es, gemäß der Erfindung, vorgesehen, dass eine durch eine Veränderung der Fokusentfernung durch die optische Anordnung oder eine Veränderung des Anstellwinkels durch die Spiegelanordnung verursachte Veränderung des Auftreffwinkels des Laserstrahls auf dem Werkstück durch eine Veränderung des lateralen Versatzes des Laserstrahls auf der fokussierenden Optik ausgeglichen wird. Der Ausgleich wird durch eine entsprechende Software in der Ansteuerelektronik der Spiegelanordnung gesteuert

### Kurze Beschreibung der Zeichnungen

Die Erfindung wird im Folgenden anhand eines in den Figuren dargestellten Ausführungsbeispiels näher erläutert. Es zeigen:
Figur 1 das optische Prinzip zur Einstellung eines Winkels und eines lateralen Versatzes von Laserstrahlen mit einer fokussierenden Optik,
Figur 2a eine Spiegelanordnung in Ausgangsposition,
Figur 2b die Spiegelanordnung mit versetztem Laserstrahl,
Figur 3a die Spiegelanordnung in Ausgangsposition,
Figur 3b die Spiegelanordnung mit einem unter einem Anstellwinkel austretenden Laserstrahl,
Figur 4 in schematischer Darstellung eine Vorrichtung zur Führung eines Laserstrahls,
Figur 5 einen optischen Aufbau zur Führung eines Laserstrahls mit einem Bearbeitungskopf,
Figur 6 einen optischen Aufbau zur Führung eines Laserstrahls mit mehreren Bearbeitungsköpfen,
Figur 7 einen Laserstrahl im Bereich der Fokusebene.

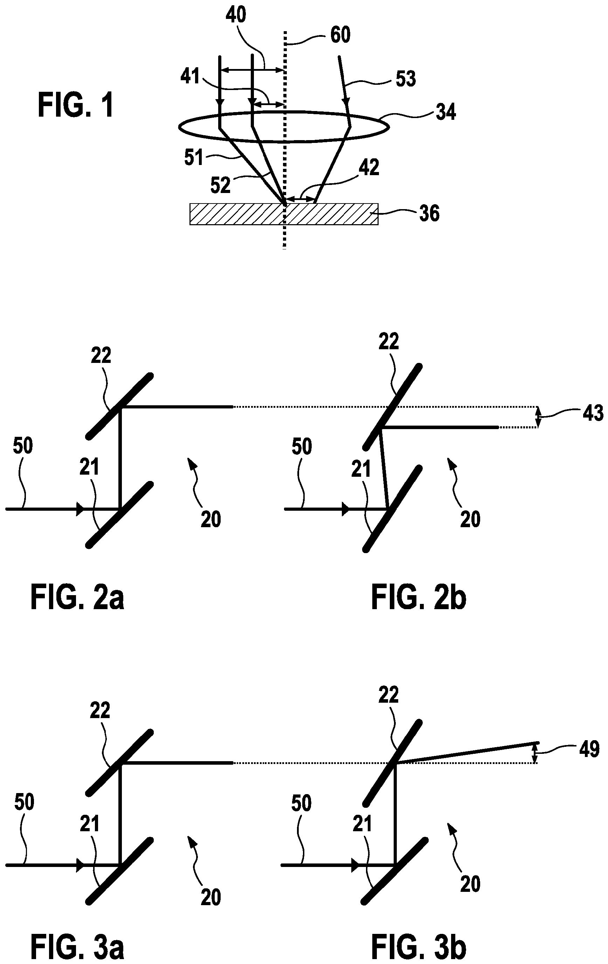

Figur 1 zeigt das optische Prinzip zur Einstellung eines Winkels und eines lateralen Versatzes von Laserstrahlen 51, 52, 53 mit einer fokussierenden Optik 34. Ein erster Laserstrahl 51 trifft in einem ersten Abstand 40 und ein zweiter Laserstrahl 52 in einem zweiten Abstand 41 zu einer optischen Achse 60 auf die fokussierende Optik 34. Die beiden Laserstrahlen 51, 52 verlaufen vor der fokussierenden Optik 34 parallel zu der optischen Achse 60. Ein dritter Laserstrahl 53 trifft, bezogen auf die optische Achse 60, unter einem Winkel auf die fokussierende Optik 34. Die Laserstrahlen 51, 52, 53 werden durch die fokussierende Optik 34 auf ein zu bearbeitendes Werkstück 36 gelenkt, wobei die beiden zuvor parallel zur optischen Achse 60 verlaufenden Laserstrahlen 51, 52 auf der optischen Achse auf das Werkstück treffen, während der vor der fokussierenden Optik 34 in einem Winkel zur optischen Achse 60 verlaufende Laserstrahl 53 in einem dritten Abstand 42 von der optischen Achse 60 auf das Werkstück trifft.

Die fokussierende Optik 34 wandelt demnach einen Strahlversatz in einen Winkel und einen Winkel in einen Strahlversatz um. Je weiter beabstandet der Laserstrahl 51, 52, 53 auf die fokussierende Optik 34 trifft, desto stärker wird er durch die fokussierende Optik 34 zur optischen Achse 60 hin gebrochen. Durch den Abstand 40, 41, in dem der Laserstrahl 51, 52, 53 auf die fokussierende Optik 34 trifft, kann demnach der Winkel eingestellt werden, in dem der Laserstrahl 51, 52, 53 auf das Werkstück 36 trifft.

Durch den Winkel, mit dem der Laserstrahl 51, 52, 53 auf die fokussierende Optik 34 trifft, kann der Abstand 42 zur optischen Achse 60 vorgegeben werden, in dem der Laserstrahl 51, 52, 53 auf das Werkstück 36 trifft. Durch entsprechend Führung des Laserstrahls 51, 52, 53 über die fokussierende Optik 34 können demnach die Auftreffwinkel und die Bahnen, in denen ein Laserstrahl 51, 52, 53 über das Werkstück 36 geführt wird, vorgegeben werden. Dadurch wird es möglich, den Laserstrahl 51, 52, 53 schnell und entlang vorgegebener, um die optische Achse 60 verlaufender geschlossener Bahnen unter geeigneten Winkeln auf das Werkstück 36 zu lenken und dieses zu bearbeiten. Dies ermöglicht beispielsweise das Bohren von Löchern oder das umlaufende Verschweißen von Fügepartnern.

Figur 2a zeigt eine Spiegelanordnung 20 in Ausgangsposition mit einem ersten Spiegel 21 und einem zweiten Spiegel 22, von denen ein Laserstrahl 50 geführt ist. Die Spiegel 21, 22 sind in dem Ausführungsbeispiel als kardanisch aufgehängter Ablenkspiegel ausgeführt, welche jeweils über zwei zumindest annähernd orthogonal zueinander stehende Kippachsen gedreht werden können. Der Antrieb erfolgt dabei über Piezoaktuatoren. Alternativ dazu können auch durch Linearantriebe bewegte Spiegel 21, 22 vorgesehen sein oder die Funktion eines Spiegels 21, 22 kann durch ein Paar drehbar gelagerter Spiegel mit zumindest näherungsweise orthogonalen Drehachsen (Galvanometerspiegel) realisiert sein.

Die Spiegel 21, 22 ermöglichen die Ablenkung des Laserstrahls 50 in x- und y-Richtung, wobei in der Darstellung die x-Richtung senkrecht zur Zeichenebene und die y-Richtung entsprechend dem Strahlverlauf zwischen den Spiegeln 21, 22 verläuft. Die z-Richtung entspricht dem Verlauf des Laserstrahls 50 vor und nach der Spiegelanordnung 20.

Figur 2b zeigt die Spiegelanordnung 20 mit versetztem Laserstrahl 50. Im Vergleich zu Figur 2a sind die beiden Spiegel 21, 22 gleichsinnig und um einen gleichen Winkel um in x-Richtung verlaufende Drehachsen verdreht. Dadurch bildet sich gegenüber dem Verlauf des Laserstrahls 50 in Ausgangsposition der Spiegel 21, 22 ein lateraler Versatz 43 des Laserstrahls 40 in y-Richtung aus. Durch die Wahl des Kippwinkels der Spiegel 21, 22 kann der laterale Versatz 43 eingestellt werden. Durch eine entsprechend Drehung der Spiegel 21, 22 um in y-Richtung verlaufende Drehachsen kann ein Versatz 43 in x-Richtung bewirkt werden, so dass der Laserstrahl 50 in den durch die Spiegelanordnung 20 gegebenen Grenzen auf beliebige x-y-Koordinaten versetzt werden kann.

Figur 3a zeigt die Spiegelanordnung 20, wie bereits in Figur 2a gezeigt, in Ausgangsposition der Spiegel 21, 22 als Vergleich für den in Figur 3b gezeigten Verlauf des Laserstrahls 50.

Figur 3b zeigt die Spiegelanordnung 20 mit einem unter einem Anstellwinkel 49 austretenden Laserstrahl 50. Um diesen Anstellwinkel 49 zu erhalten ist der zweite Spiegel 22 um eine in x-Richtung verlaufende Drehachse verdreht, während der erste Spiegel 21 in der Ausgangsposition steht. Dies führt im Vergleich zur Ausbreitungsrichtung bei parallel angeordneten Spiegel 21, 22 zu einer Ablenkung des Laserstrahls 50 in y-Richtung. Entsprechend kann der Laserstrahl durch eine Drehung des zweiten Spiegels 22 um eine in y-Richtung verlaufende Drehachse in x-Richtung abgelenkt werden. Durch die Spiegelanordnung 20 kann somit der Anstellwinkel 49 des Laserstrahls im Rahmen der Einstellmöglichkeiten der Spiegelanordnung 20 beliebig eingestellt werden. Durch Überlagerung der in den Figuren 2b und 3b gezeigten Spiegelbewegungen kann sowohl der laterale Versatz 43 wie auch der Anstellwinkel 49 des Laserstrahls 50 durch die Spiegelanordnung 20 eingestellt werden.

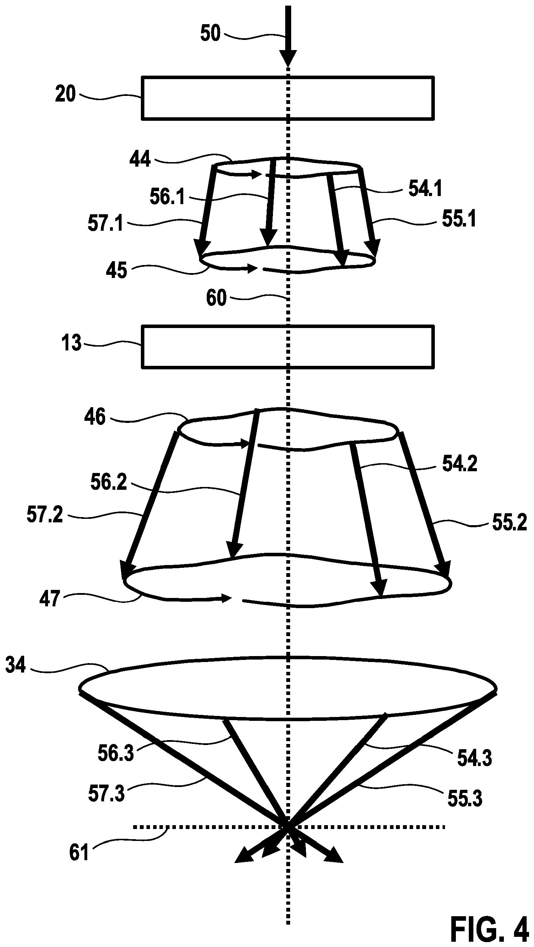

Figur 4 zeigt in schematischer Darstellung eine Vorrichtung zur Führung eines Laserstrahls 50. Dabei sind die gleichen bereits eingeführten Bezeichner verwendet.

Entlang der optischen Achse 60 sind eine Spiegelanordnung 20, eine optische Anordnung 13 zur Strahlaufweitung und zur variablen Einstellung der Fokusentfernung des Laserstrahls 50 und eine fokussierende Optik 34 angeordnet. Die Spiegelanordnung 20 entspricht dabei der in den Figuren 2a, 2b, 3a, 3b gezeigten Anordnung.

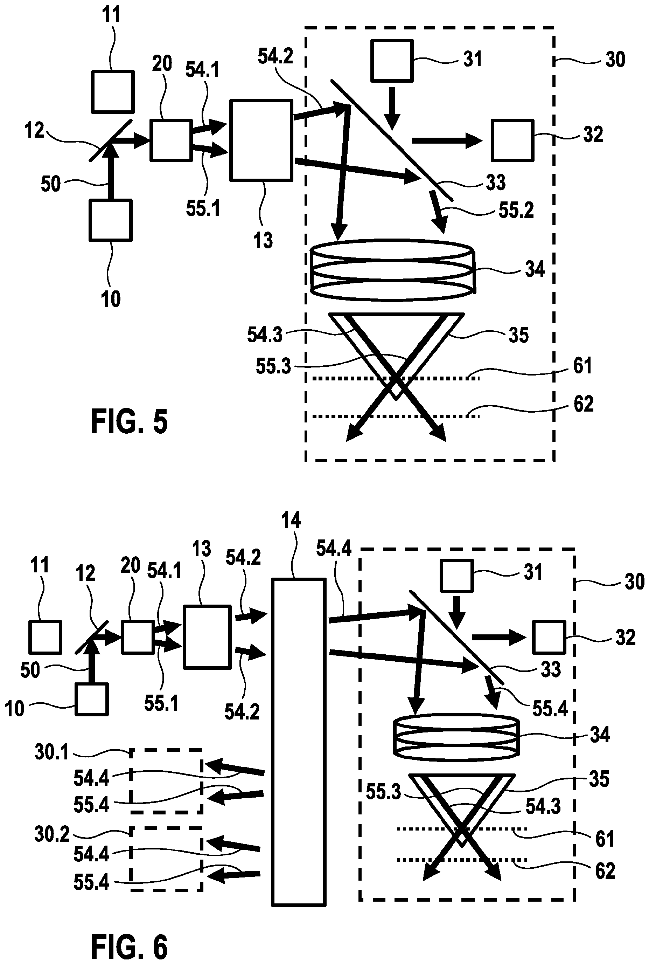

Der Laserstrahl 50 wird durch die Spiegelanordnung 20 gegenüber der optischen Achse 60 lateral versetzt und seine Ausbreitungsrichtung wird geändert. Durch eine entsprechende Ansteuerung der Spiegel 21, 22 der Spiegelanordnung folgt der Laserstrahl 50 einer ersten Trajektorie 44 und in einem größeren Abstand von der Spiegelanordnung 20 einer zweiten Trajektorie 45 mit entsprechend größerem Durchmesser. Alternativ kann der optische Aufbau auch so ausgeführt sein, dass der Durchmesser der zweiten Trajektorie 45 kleiner als der Durchmesser der ersten Trajektorie 44 oder gleich ist. Sind die Durchmesser identisch, stimmen die Taumelebene 61 und Brennebene überein. Zur Verdeutlichung sind beispielhaft entlang den Trajektorien 44, 45 ein Laserstrahl t1a 54.1 nach der Spiegelanordnung 20 zu einem ersten Zeitpunkt t1, ein Laserstrahl t2a 55.1 nach der Spiegelanordnung 20 zu einem darauf folgenden zweiten Zeitpunkt t2, ein Laserstrahl t3a 56.1 nach der Spiegelanordnung 20 zu einem dritten Zeitpunkt t3 und ein Laserstrahl t4a 57.1 nach der Spiegelanordnung 20 zu einem vierten Zeitpunkt t4 während einer Bewegung des Laserstrahls 50 um die optische Achse 60 eingezeichnet. Der so bewegte Laserstrahl 50 trifft erfindungsgemäß auf eine optische Anordnung 13 zur Strahlaufweitung und zur variablen Einstellung der Fokusentfernung des Laserstrahls 50. Durch diese auch Z-Translator genannte optische Anordnung 13 wird die auftreffende Laserstrahlung derart aufgeweitet, dass der Laserstrahl 50 weiter von der optischen Achse 60 versetzt wird. Weiterhin kann der Laserstrahl 50 durch die optische Anordnung 13 leicht konvergent oder divergent eingestellt werden, wodurch die in Figur 5 gezeigte Fokusebene 62 beziehungsweise deren Abstand zur Taumelebene 61 verschoben werden kann. Die optische Anordnung 13 ermöglicht so eine dynamische Anpassung der Fokusebene 62 entsprechend der Bewegung des Laserstrahls 50.

Nach der optischen Anordnung 13 zur Strahlaufweitung und zur variablen Einstellung der Fokusentfernung folgt der Laserstrahl 50 einer durch eine dritten Trajektorie 46 und im weiteren Verlauf einer vierten Trajektorie 47 gezeigten Bahn. Diese Trajektorien 46, 47 laufen gegenüber der zweiten Trajektorie 45 auf Grund der Strahlaufweitung auf einem größeren Durchmesser um die optische Achse 60. Zur Verdeutlichung dieser Versatzmultiplikation sind beispielhaft entlang den Trajektorien 46, 47 ein Laserstrahl t1b 54.2 nach der optischen Anordnung 13 zu dem ersten Zeitpunkt t1, ein Laserstrahl t2b 55.2 nach der optischen Anordnung 13 zu dem darauf folgenden zweiten Zeitpunkt t2, ein Laserstrahl t3b 56.2 nach der optischen Anordnung 13 zu dem dritten Zeitpunkt t3 und ein Laserstrahl t4b 57.2 nach der optischen Anordnung 13 zu dem vierten Zeitpunkt t4 während einer Bewegung des Laserstrahls 50 um die optische Achse 60 eingezeichnet.

Die fokussierende Optik 34 fokussiert den Laserstrahl 50 in der Fokusebene 62. Sie wandelt den Strahlversatz des Laserstrahls 50 in einen Winkel und einen Winkel in der Ausbreitungsrichtung des Laserstrahls 50 zur optischen Achse 60 in einen Strahlversatz um. Dabei kreuzt der Laserstrahl 50 die optische Achse 60 in der Taumelebene 61, um anschließend nicht dargestellt in der Fokusebene 62 auf das Werkstück zu treffen. Zur Verdeutlichung sind auch hier beispielhaft ein Laserstrahl t1c 54.3 nach der fokussierenden Optik 34 zu dem ersten Zeitpunkt t1, ein Laserstrahl t2c 55.3 nach der fokussierenden Optik 34 zu dem darauf folgenden zweiten Zeitpunkt t2, ein Laserstrahl t3c 56.3 nach der fokussierenden Optik 34 zu dem dritten Zeitpunkt t3 und ein Laserstrahl t4c 57.3 nach der fokussierenden Optik 34 zu dem vierten Zeitpunkt t4 während einer Bewegung des Laserstrahls 50 um die optische Achse 60 eingezeichnet.

Die optische Anordnung 13 zur Strahlaufweitung und zur variablen Einstellung der Fokusentfernung bewirkt somit eine Versatzmultiplikation, wodurch sich auch bei geringem einstellbaren seitlichen Versatz 43 durch die Spiegelanordnung 20 ein ausreichend großer seitlicher Versatz vor der nachfolgenden fokussierenden Optik 34 einstellen lässt, um so einen ausreichenden Stellbereich für den Auftreffwinkel des Laserstrahls 50 auf dem Werkstück 36 zu erhalten.

Der Strahlversatz und der Anstellwinkel werden beide durch die Spiegel 21, 22 der Spiegelanordnung 20 reflektiv erzeugt. Da auch der Anstellwinkel vor der Strahlaufweitung erzeugt wird sind keine drehenden Spiegel mehr zwischen der optischen Anordnung 13 zur Strahlaufweitung und der fokussierenden Optik 34 notwendig. Dadurch können kleine und damit dynamische Spiegel 21, 22 verwendet werden. Der durch die Spiegelanordnung 20 zu erzeugende Versatz des Laserstrahls 50 ist auf Grund der Versatzmultiplikation durch die optische Anordnung 34 vergleichsweise klein, so dass keine zusätzlichen optischen Elemente, wie beispielsweise Faltspiegel, in der Spiegelanordnung 20 vorgesehen werden müssen. Dies führt dazu, dass handelsübliche und damit günstige Spiegelanordnungen 20, beispielsweise in Form von Galvano-Scannern mit Standard-Spiegeln, verwendet werden können. Die Anordnung kann durch die reflektive Strahlführung und durch den Wegfall großer Scanspiegel kompakt aufgebaut werden.

In einer alternativen Ausführungsform kann es vorgesehen sein, dass größere optische Abstände durch entsprechende Faltspiegel gefaltet werden. Dadurch kann ein noch kompakterer Aufbau erreicht werden. Die Anzahl der benötigten Faltspiegel ist im Vergleich zu bekannten Systemen gering.

Figur 5 zeigt in einem Ausführungsbeispiel einen optischen Aufbau zur Führung eines Laserstrahls 50 mit einem Bearbeitungskopf 30, wie er zur Erzeugung eines in Figur 4 gezeigten Strahlengangs geeignet ist.

Entlang der Ausbreitung eines Laserstrahls 50 sind eine Laserquelle 10, ein erster Strahlteiler 12, die Spiegelanordnung 20, die optische Anordnung 13 zur Strahlaufweitung und zur variablen Einstellung der Fokusentfernung des Laserstrahls 50, ein zweiter Strahlteiler 33, die fokussierende Optik 34 und einer Prozessgasdüse 35 angeordnet. Dem ersten Strahlteiler 12 sind erste Sensorelemente 11 mit zugehöriger Zusatztechnik zugeordnet. Dem zweiten Strahlteiler 33 sind einer Kamera 31 mit Zusatztechnik und Sensorik sowie zweite Sensorelemente 32 mit Zusatztechnik zugeordnet.

Der Laserstrahl 50 wird von der Laserquelle 10 ausgesendet dem ersten Strahlteiler 12 zugeführt. Anschließend erfolgt in der Spiegelanordnung 20 die beschriebene laterale Versetzung sowie die Einstellung des Anstellwinkels 49 des Laserstrahls 50, beispielhaft gezeigt durch den Laserstrahl t1a 54.1 nach der Spiegelanordnung 20 zu einem ersten Zeitpunkt t1 und den Laserstrahl t2a 55.1 nach der Spiegelanordnung 20 zu einem darauf folgenden zweiten Zeitpunkt t2. Durch die optische Anordnung 13 zur Strahlaufweitung und zur variablen Einstellung der Fokusentfernung des Laserstrahls 50 wird der Laserstrahl 50 mit der beschriebenen Versatzmultiplikation aufgeweitet und die Fokusentfernung wird auf eine Fokusebene 62 eingestellt. Wiederum beispielhaft durch einen Laserstrahl t1b 54.2 nach der optischen Anordnung 13 zu dem ersten Zeitpunkt t1 und einen Laserstrahl t2b 55.2 nach der optischen Anordnung 13 zu dem zweiten Zeitpunkt t2 dargestellt wird der Laserstrahl 50 durch den zweiten Strahlteiler 33 auf die fokussierende Optik 34 gelenkt. Die fokussierende Optik 34 wandelt den seitlichen Versatz des Laserstrahls 50 in einen Winkel und den Anstellwinkel 49 in einen seitlichen Versatz um. Das optische System ist dabei so ausgelegt, dass der Laserstrahl 50 während seiner Bewegung um die optische Achse 60 diese in einer Taumelebene 61 schneidet und dann in der Fokusebene 62 unter einem negativen Winkel und seitlich versetzt zur optischen Achse 60 auf das hier nicht dargestellte Werkstück 36 trifft. Durch die Prozessgasdüse 35 wird ein Prozessgas zugeführt, welches eine Korrosion des Werkstücks 36 während der Bearbeitung verhindert und abgetragenes Material wegbläst.

Die Strahlteiler 12, 33 sind durch entsprechende Beschichtungen so ausgeführt, dass ein geringer Teil der Laserstrahlung sowie zur Laserwellenlänge benachbarte Wellenlängen zu den Sensorelementen 11, 32 beziehungsweise zur Kamera 31 weiter geleitet werden.

Die dem ersten Strahlteiler 12 zugeordneten ersten Sensorelemente 11 dienen in dem Ausführungsbeispiel der Überwachung des Strahlprofils und der Strahlposition. Mit der dem zweiten Strahlteiler 33 folgenden zweite Sensorik 32 und der Kamera 31 können die Brennebene mit dem zu bearbeitenden Bauteil analysiert werden. Es können die Spotgröße, die Fokussierung, das Strahlprofil im Fokus, das Bearbeitungsergebnis sowie die Abstrahlung des Plasmas überwacht werden. Weiterhin kann durch den zweiten Strahlteiler 33 eine koaxiale Beleuchtung des Werkstücks erfolgen.

Der zweite Strahlteiler 33, die Kamera 31, die zweiten Sensorelemente 33, die fokussierende Optik 34 und die Prozessgasdüse 35 sind in dem Bearbeitungskopfes 30 zusammengefasst. Da sowohl der seitliche Versatz wie auch die Einstellung des Anstellwinkels in der Spiegelanordnung 20 vor der optischen Anordnung 13 zur Strahlaufteilung erfolgt, müssen in dem Bearbeitungskopf 30 keine beweglichen Spiegel vorgesehen sein, was neben den bereits beschriebenen Vorteilen einen kompakten Aufbau des Bearbeitungskopfes 30 ermöglicht.

Figur 6 zeigt einen optischen Aufbau zur Führung eines Laserstrahls 50 mit mehreren Bearbeitungsköpfen 30, 30.1, 30.2. Der Aufbau entspricht dabei im Wesentlichen dem in Figur 5 gezeigten Aufbau. Zusätzlich ist zwischen der optischen Anordnung 13 zur Strahlaufweitung und zur variablen Einstellung der Fokusentfernung des Laserstrahls 50 und dem Bearbeitungskopf 30 eine Strahlweiche 14 vorgesehen. Diese teilt den Laserstrahl 50 in dem vorliegenden Ausführungsbeispiel auf den Bearbeitungskopf 30 und zwei weitere Bearbeitungsköpfe 30.1, 30.2 auf. In alternativen Ausführungsformen kann die Anzahl der angeschlossenen Bearbeitungsköpfe 30, 30.1, 30.2 variieren. Die zusätzlichen Bearbeitungsköpfe 30.1, 30.2 sind entsprechend dem Bearbeitungskopf 30 aufgebaut, so dass mit einer Vorrichtung mehrere Werkstücke 36 bearbeitet werden können.

In einer alternativen Ausführungsvariante kann die Strahlweiche 14 zwischen der Spiegelanordnung 20 und der optischen Anordnung 13 zur Strahlaufweitung angeordnet sein. Die optische Anordnung 13 zur Strahlaufweitung und zur variablen Einstellung der Fokusentfernung des Laserstrahls 50 muss dann entsprechend der Anzahl der Bearbeitungsköpfe 30, 30.1, 30.2 mehrfach vorgesehen sein.

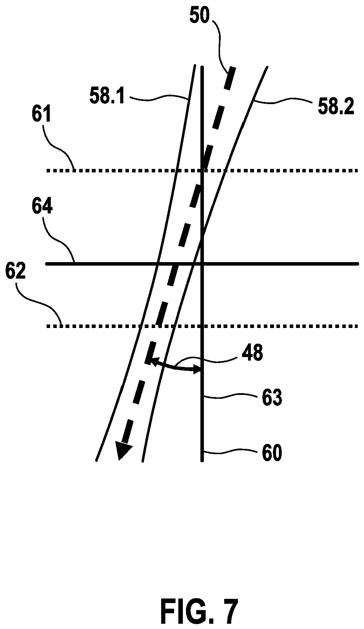

Figur 7 zeigt den Laserstrahl 50 im Bereich der Fokusebene 62. Der Laserstrahl 50 ist dabei zur Darstellung der Fokussierung durch die optische Anordnung 13 zur Strahlaufweitung und zur variablen Einstellung der Fokusentfernung und durch die fokussierende Optik 34 mit seinen Einhüllenden 58.1, 58.2 gezeigt. Zur Darstellung des Verlaufs des Laserstrahls 50 ist dieser gegenüber einer Achse zur Darstellung der x-Richtung 64 und einer Achse zur Darstellung der z-Richtung 63, welche auf der optischen Achse 60 der Anordnung verläuft, gezeigt. Der Laserstrahl 50 schneidet die optische Achse 60 in der Taumelebene 61 unter dem eingestellten Austrittswinkel 48. Der Fokus des Laserstrahls 50 liegt, dargestellt durch die stärkste Einschnürung der Einhüllenden 58.1, 58.2, in oder nahe der Fokusebene 62, in der die Bearbeitung des nicht dargestellten Werkstücks 36 erfolgt.

Durch die Einstellung der Spiegel 21, 22 der Spiegelanordnung 20 führt der Laserstrahl 50 eine Taumelbewegung um die optische Achse 60 aus, wodurch beispielsweise kreisrunde Löcher, aber auch von der runden Form abweichende Löcher in ein Werkstück 36 gebohrt werden können. Der Durchmesser der Bohrung wird dabei sowohl durch den Anstellwinkel 49, in dem der Laserstrahl 50 auf die fokussierende Optik 34 trifft, als auch durch die Positionierung des Werkstücks entlang der z-Richtung, vorgegeben. Der Austrittswinkel 48 ergibt sich aus dem seitlichen Versatz, in dem der Laserstrahl 50 auf die fokussierende Optik 34 trifft.

Eine Verstellung der Fokusentfernung durch die optische Anordnung 13 führt zu einer Verschiebung der Fokusebene 62. Durch eine Änderung des Strahlversatzes durch die Spiegelanordnung 20 wird der Austrittswinkel 48 verändert. Eine Änderung des Anstellwinkels 49 nach der Spiegelanordnung 20 führt zu einer Verschiebung der Taumelebene 61 gegenüber der Fokusebene 62 und ändert damit den Durchmesser der Bahn, in welcher sich der Laserstrahl 50 auf der Fokusebene 62 bewegt. Dabei erfolgt auch hier eine leichte Veränderung des Austrittswinkels 48. Um diese unbeabsichtigten Änderungen des Austrittswinkels 48 zu kompensieren ist in einer nicht dargestellten Steuereinheit der Spiegelanordnung 20 eine Software vorgesehen, welche durch eine entsprechende Änderung des Strahlversatzes der Beeinflussung des Austrittswinkels 48 entgegen wirkt.

## Patentansprüche

1. Vorrichtung zur Führung eines Laserstrahls (50) zur Bearbeitung eines Werkstücks (36) mit einer Spiegelanordnung (20) mit beweglichen Spiegeln (21, 22) zur Erzeugung eines Anstellwinkels (49) des Laserstrahls (50) auf eine entlang der Ausbreitungsrichtung desselben angeordnete fokussierende Optik (34) zur Einstellung eines lateralen Versatzes des Laserstrahls (50) auf dem Werkstücks (36) und zur Erzeugung eines lateralen Versatzes (43) des Laserstrahls (50) auf der fokussierenden Optik (34) zur Einstellung eines Auftreffwinkels des Laserstrahls (50) auf dem Werkstück (36), **dadurch gekennzeichnet, dass** zwischen der Spiegelanordnung (20) und der fokussierenden Optik (34) eine optische Anordnung (13) zur Strahlaufweitung und zur variablen Einstellung der Fokusentfernung des Laserstrahls (50) angeordnet ist, wobei eine Software in der Ansteuerelektronik der Spiegelanordnung (20) dazu eingerichtet ist, eine durch eine Veränderung der Fokusentfernung durch die optische Anordnung (13) oder durch eine Veränderung des Anstellwinkels (49) durch die Spiegelanordnung (20) verursachte Veränderung des Auftreffwinkels des Laserstrahls (50) auf dem Werkstück durch eine Veränderung des lateralen Versatzes des Laserstrahls (50) auf der fokussierenden Optik auszugleichen.

2. Vorrichtung nach Anspruch 1, **dadurch gekennzeichnet, dass** die Spiegelanordnung (20) aus zwei kardanisch gelagerten Spiegeln (21, 22) oder aus einem ersten Spiegelpaar mit parallelen Drehachsen und einem zweiten Spiegelpaar mit parallelen, zu dem ersten Spiegelpaar zumindest näherungsweise orthogonal angeordneten Drehachsen ausgeführt ist.

3. Vorrichtung nach Anspruch 1 oder 2, **dadurch gekennzeichnet, dass** die Spiegel (21, 22) durch Piezoaktoren oder durch Linearantriebe angetrieben sind oder dass die Spiegel (21, 22) als Galvanometerspiegel ausgeführt sind.

4. Vorrichtung nach einem der Ansprüche 1 bis 3, **dadurch gekennzeichnet, dass** in dem Strahlengang des Laserstrahls (50) zwischen der Spiegelanordnung (20) und der optischen Anordnung zur Strahlaufweitung und zur variablen Einstellung der Fokusentfernung eine Strahlweiche vorgesehen ist, welche den Laserstrahl (50) auf zwei oder mehrere optische Anordnungen zur Strahlaufweitung und zur variablen Einstellung der Fokusentfernungen und den Strahlengängen folgend auf zwei oder mehrere fokussierende Optiken (34) aufteilt oder dass in dem Strahlengang des Laserstrahls (50) nach der optischen Anordnung (13) zur Strahlaufweitung und zur variablen Einstellung der Fokusentfernung eine Strahlweiche (14) vorgesehen ist, welche den Laserstrahl (50) auf zwei oder mehrere fokussierende Optiken (34) aufteilt.

5. Vorrichtung nach einem der Ansprüche 1 bis 4, **dadurch gekennzeichnet, dass** die Vorrichtung entlang der Ausbreitung des Laserstrahls (50) zumindest folgende Komponenten aufweist:
∘ eine Laserquelle (10)
∘ die Spiegelanordnung (20)
∘ die optische Anordnung (13) zur Strahlaufweitung und zur variablen Einstellung der Fokusentfernung
∘ die fokussierende Optik (34) nach einem Strahlteiler (33).

6. Verfahren zur Führung eines Laserstrahls (50) zur Bearbeitung eines Werkstücks (36), wobei mit einer Spiegelanordnung (20) mit beweglichen Spiegeln (21, 22) ein Anstellwinkel (49) des Laserstrahls (50) auf eine fokussierende Optik (34) zur Einstellung eines lateralen Versatzes des Laserstrahls (50) auf dem Werkstücks (36) und ein lateraler Versatz (43) des Laserstrahls (50) auf der fokussierenden Optik (34) zur Einstellung eines Auftreffwinkels des Laserstrahls (50) auf dem Werkstücks (36) erzeugt wird und wobei durch eine entsprechende Bewegung der Spiegel (21, 22) der Laserstrahl (50) unter vorgegebenen Winkeln auf vorgegebenen, um eine optische Achse verlaufenden Bahnen über das Werkstücks (36) geführt wird, **dadurch gekennzeichnet, dass** der Verlauf des Laserstrahls (50) mit einer zwischen der Spiegelanordnung (20) und der fokussierenden Optik (34) vorgesehenen optischen Anordnung (13) aufgeweitet wird und dass die Fokusentfernung des Laserstrahls (50) durch die optische Anordnung (13) eingestellt wird, wobei eine durch eine Veränderung der Fokusentfernung durch die optische Anordnung (13) oder durch eine Veränderung des Anstellwinkels (49) durch die Spiegelanordnung (20) verursachte Veränderung des Auftreffwinkels des Laserstrahls (50) auf dem Werkstück durch eine Veränderung des lateralen Versatzes des Laserstrahls (50) auf der fokussierenden Optik ausgeglichen wird.

## Claims

1. Apparatus for guiding a laser beam (50) for processing a workpiece (36), having a mirror arrangement (20) with movable mirrors (21, 22) for producing an angle of attack (49) of the laser beam (50) onto a focusing optical unit (34), the latter being arranged along the propagation direction of the laser beam, for setting a lateral offset of the laser beam (50) on the workpiece (36) and for producing a lateral offset (43) of the laser beam (50) on the focusing optical unit (34) for setting an angle of incidence of the laser beam (50) on the workpiece (36), **characterized in that** an optical arrangement (13) for beam expansion and for variably setting the focus distance of the laser beam (50) is arranged between the mirror arrangement (20) and the focusing optical unit (34), wherein software in the actuation electronics of the mirror arrangement (20) is configured to compensate for a change in the angle of incidence of the laser beam (50) on the workpiece, caused by a change in the focus distance by way of the optical arrangement (13) or by a change in the angle of attack (49) by way of the mirror arrangement (20), on the workpiece by changing the lateral offset of the laser beam (50) on the focusing optical unit.

2. Apparatus according to Claim 1, **characterized in that** the mirror arrangement (20) is made up of two gimbal-mounted mirrors (21, 22) or of a first mirror pair with parallel axes of rotation and a second mirror pair with parallel axes of rotation which are arranged at least approximately orthogonally to the first mirror pair.

3. Apparatus according to Claim 1 or 2, **characterized in that** the mirrors (21, 22) are driven by piezo actuators or by linear drives or **in that** the mirrors (21, 22) are designed as galvanometer mirrors.

4. Apparatus according to any of Claims 1 to 3, **characterized in that** a beam switch is provided in the beam path of the laser beam (50) between the mirror arrangement (20) and the optical arrangement for beam expansion and for variably setting the focus distance, which beam switch divides the laser beam (50) between two or more optical arrangements for beam expansion and for variably setting the focus distances and, following the beam paths, over two or more focusing optical units (34), or **in that** a beam switch (14) is provided in the beam path of the laser beam (50) downstream of the optical arrangement (13) for beam expansion and for variably setting the focus distance, which beam switch divides the laser beam (50) over two or more focusing optical units (34) .

5. Apparatus according to any of Claims 1 to 4, **characterized in that** the apparatus has, along the propagation of the laser beam (50), at least the following components:
o a laser source (10)
o the mirror arrangement (20)
o the optical arrangement (13) for beam expansion and for variably setting the focus distance
o the focusing optical unit (34) downstream of a beam splitter (33).

6. Method for guiding a laser beam (50) for processing a workpiece (36), wherein an angle of attack (49) of the laser beam (50) onto a focusing optical unit (34) for setting a lateral offset of the laser beam (50) on the workpiece (36) and a lateral offset (43) of the laser beam (50) on the focusing optical unit (34) for setting an angle of incidence of the laser beam (50) on the workpiece (36) are produced using a mirror arrangement (20) having movable mirrors (21, 22), and wherein the laser beam (50) is guided, at specified angles along specified paths running around an optical axis, over the workpiece (36) by way of a corresponding movement of the mirrors (21, 22), **characterized in that** the profile of the laser beam (50) is expanded using an optical arrangement (13) provided between the mirror arrangement (20) and the focusing optical unit (34), and **in that** the focus distance of the laser beam (50) is set by way of the optical arrangement (13), wherein a change in the angle of incidence of the laser beam (50), caused by a change in the focus distance by way of the optical arrangement (13) or by a change in the angle of attack (49) by way of the mirror arrangement (20), on the workpiece is compensated for by a change in the lateral offset of the laser beam (50) on the focusing optical unit.

## Revendications

1. Dispositif de guidage d'un faisceau laser (50) destiné à traiter une pièce (36) comportant un ensemble de miroirs (20) pourvu de miroirs mobiles (21, 22) destinés à générer un angle d'incidence (49) du faisceau laser (50) sur une optique de focalisation (34) disposée suivant la direction de propagation dudit faisceau laser afin de régler un décalage latéral du faisceau laser (50) sur la pièce (36) et de générer un décalage latéral (43) du faisceau laser (50) sur l'optique de focalisation (34) afin de régler un angle d'incidence du faisceau laser (50) sur la pièce (36), **caractérisé en ce qu'**un ensemble optique (13) destiné à l'expansion du faisceau et au réglage variable de la distance focale du faisceau laser (50) est disposé entre l'ensemble de miroirs (20) et l'optique de focalisation (34), un logiciel situé dans l'électronique de commande de l'ensemble de miroirs (20) étant conçu pour compenser, en modifiant le décalage latéral du faisceau laser (50) sur l'optique de focalisation, une modification de l'angle d'incidence du faisceau laser (50) sur la pièce, laquelle modification est due à une modification de la distance focale par l'ensemble optique (13) et à une modification de l'angle d'incidence (49) par l'ensemble de miroirs (20).

2. Dispositif selon la revendication 1, **caractérisé en ce que** l'ensemble de miroirs (20) est réalisé à partir de deux miroirs montés à Cardan (21, 22) ou d'une première paire de miroirs à axes de rotation parallèles et d'une deuxième paire de miroirs à axes de rotation parallèles qui sont disposés au moins approximativement orthogonalement à la première paire de miroirs.

3. Dispositif selon la revendication 1 ou 2, **caractérisé en ce que** les miroirs (21, 22) sont entraînés par des actionneurs piézoélectriques ou par des entraînements linéaires ou **en ce que** les miroirs (21, 22) sont réalisés sous la forme de miroirs de galvanomètre.

4. Dispositif selon l'une des revendications 1 à 3, **caractérisé en ce qu'**un commutateur de faisceau est prévu dans le trajet du faisceau laser (50) entre l'ensemble de miroirs (20) et l'ensemble optique destiné à l'expansion du faisceau et au réglage variable de la distance focale et répartit le faisceau laser (50) sur deux ensembles optiques ou plus destinés à l'expansion de faisceau et au réglage variable des distances focales et suivant les trajets du faisceau sur deux optiques de focalisation (34) ou plus, ou **en ce qu'**un commutateur de faisceau (14) est prévu dans le trajet du faisceau laser (50) après l'ensemble optique (13) destiné à l'expansion de faisceau et au réglage variable de la distance focale et répartit le faisceau laser (50) sur deux optiques de focalisation (34) ou plus.

5. Dispositif selon l'une des revendications 1 à 4, **caractérisé en ce que** le dispositif comporte suivant la propagation du faisceau laser (50) au moins les composants suivants :
o une source laser (10)
o l'ensemble de miroirs (20)
o l'ensemble optique (13) destiné à l'expansion de faisceau et au réglage variable de la distance focale
o l'optique de focalisation (34) après un séparateur de faisceau (33).

6. Procédé de guidage d'un faisceau laser (50) destiné à traiter une pièce (36), un ensemble de miroirs (20) pourvu de miroirs mobiles (21, 22) permettant de générer un angle d'incidence (49) du faisceau laser (50) sur une optique de focalisation (34) afin de régler un décalage latéral du faisceau laser (50) sur la pièce (36) et un décalage latéral (43) du faisceau laser (50) sur l'optique de focalisation (34) afin de régler un angle d'incidence du faisceau laser (50) sur la pièce (36) et un mouvement correspondant des miroirs (21, 22) guidant le faisceau laser (50) sur la pièce (36) à des angles spécifiés sur des trajectoires prédéterminées s'étendant autour d'un axe optique, **caractérisé en ce que** le profil du faisceau laser (50) est expansé avec un ensemble optique (13) prévu entre l'ensemble de miroirs (20) et l'optique de focalisation (34) et **en ce que** la distance focale du faisceau laser (50) est réglée par l'ensemble optique (13), une modification de l'angle d'incidence du faisceau laser (50) sur la pièce, laquelle modification est due à une modification de la distance focale par l'ensemble optique (13) ou par une modification de l'angle d'incidence (49) par l'ensemble de miroirs (20), étant compensée par une modification du décalage latéral du faisceau laser (50) sur l'optique de focalisation.
